# EUROPÄISCHE PATENTSCHRIFT

(11) **EP 1 925 418 B1**
(45) Veröffentlichungstag und Bekanntmachung des Hinweises auf die Patenterteilung: **31.03.2010**
(21) Anmeldenummer: 07118857.7
(22) Anmeldetag: 19.10.2007
(51) Int. Cl.: B29C 44/34, C08J 9/16

(54) **Verfahren und Anlage zur Herstellung von Polymerpartikeln**
Method and device for manufacturing polymer particles
Procédé et installation destinés à la fabrication de particules polymères

(30) Priorität: 23.11.2006 EP 06124631
(43) Veröffentlichungstag der Anmeldung: 28.05.2008
(73) Patentinhaber: Sulzer Chemtech AG, 8404 Winterthur (CH)
(72) Erfinder: Nising, Dr., Philip, 8422 Pfungen (CH)
(74) Vertreter: Gernet, Samuel Andreas

(56) Entgegenhaltungen:
- EP-A1- 0 668 139
- EP-B1- 0 638 017
- DE-A1- 1 569 024
- JP-A- 6 166 115

## Beschreibung

Die Erfindung betrifft ein Verfahren sowie eine Anlage zur Herstellung von geschäumten oder schäumbaren Polymerpartikeln. Die Erfindung bezieht sich auch auf eine Anlage zur Herstellung von geschäumten oder schäumbaren Polymerpartikeln.

Ein Verfahren bzw. eine Einrichtung zur Herstellung von geschäumten oder schäumbaren Polymerpartikeln ist aus der EP-A- 0 668 139 bekannt. Gemäss dieses Verfahrens wird ein fluides Treibmittel in einer Polymerschmelze dispergiert, wobei das Dispergieren mittels statischer Mischelemente bei hoher Scherung der Schmelze unter Ausbildung feiner Treibmitteltropfen durchgeführt wird und das Gemisch im anschliessenden Verfahrensschritt mittels weiterer statischer Mischelemente einer kleinen Scherung ausgesetzt wird, wobei das Treibmittel in der Schmelze gelöst wird. Anschliessend erfolgt die Abkühlung des Gemisches, worauf das Gemisch durch Düsen extrudiert wird, sodass Stränge gebildet werden, die im Anschluss an die Düsen schlagartig gekühlt werden. Hierdurch wird verhindert, dass Treibmittel in den Strängen einen Aufschäumprozess initiiert. Die Stränge werden mittels einer Granuliervorrichtung zu einer Granulatform zerkleinert. Ein mit diesem Verfahren hergestelltes Granulat enthält somit eine bekannte Menge an fluidem Treibmittel, es handelt sich dementsprechend um ein geschäumtes oder schäumbares Polymerpartikel. Das Treibmittel diffundiert im Lauf der Zeit während der Lagerung aus den Polymerpartikeln heraus, sodass nach längerer Lagerung des Granulats jedes der Polymerpartikel eine uneinheitliche Restmenge an fluidem Treibmittel enthält, wodurch die Spezifikationen für die Weiterverarbeitung des Granulats zu einem Artikel aus geschäumtem Polymer nicht mehr eingehalten werden. Derartiges Granulat konnte bisher nicht wiederverwertet werden, weil die Restmenge an fluidem Treibmittel nicht ermittelt werden konnte.

Ein Problem bei der Herstellung schäumbarer Polymerpartikel, wie beispielsweise EPS, mittels eines Suspensionsverfahrens, ist das Anfallen von Produktanteilen, die nicht den Spezifikationen entsprechen, so genannte "off-spec" Produktanteile. Je nach Prozessparametern können diese, z.B. wegen ihrer Partikelgröße, nicht verwendbaren Produktanteile 5 bis 20 % des mit dem Suspensionsverfahren hergestellten Produkts betragen. In der Regel werden diese off-spec Produktanteile durch Sieben abgetrennt und thermisch entsorgt, was einen deutlich negativen Effekt auf die Wirtschaftlichkeit des Gesamtprozesses hat.

Auch bei der Herstellung von schäumbaren Polymerpartikeln mittels des Suspensionsverfahrens besteht als weiteres Problem die begrenzte Lagerfähigkeit der treibmittelhaltigen Polymerpartikel. Zu lange gelagerte treibmittelhaltige Polymerpartikel verlieren durch den vorhin beschriebenen Diffusionsprozess während der Lagerdauer kontinuierlich Treibmittel, was zu größeren Mengen nicht mehr verkäuflichen Produkts führt, da letzteres zu wenig Treibmittel enthält.

Ein Recyceln von Produktanteilen, die nicht den Spezifikationen für die Weiterverarbeitung zu geschäumten Polymerartikeln entspricht, ist aufgrund der Prozesseigenschaften im Suspensionsverfahren und auch in bisher beschriebenen Verfahren, die auf Extrusion basieren (WO03106544 A2), mengenmäßig nur begrenzt möglich. Ein Problem ist die oft uneinheitliche Restmenge an Treibmittel in den Partikeln eines solchen Produktanteils.

Ein Verfahren zur Verarbeitung von Polymerrezyklat ist aus der EP0638017 B1 bekannt. Dieses Polymerrezyklat entsteht aus so genanntem begasten Kunststoffmaterial, wie beispielsweise geschäumtem Polystyrol. In der zugehörigen Anlage wird das zuvor zerkleinerte und kompaktierte Polymerrezyklat aufgeschmolzen, filtriert, entgast, granuliert und durch Mischung mit Treibgas wieder begast. Die Wiederbegasung wird an dem der Entgasung unterworfenen Kunststoffmaterial vor dem Granulierschritt mit einem gasförmigen Treibmittel durchgeführt. Das Treibmittel wird der entgasten Polymerrezyklatschmelze im Anschluss an eine Schmelzepumpe vor oder in einem Mischer zugeführt. Hiermit kann die von der Schmelzepumpe pro Zeiteinheit geförderte Kunststoffmenge überwacht werden und entsprechend der geförderten Kunststoffmenge Treibgas zudosiert wird. Zur entsprechenden Dosierung des Treibgases ist es erforderlich, dass das pro Zeiteinheit in das Kunststoffmaterial eingeführte Treibgasvolumen und das bei der Mischung pro Zeiteinheit verarbeitete Mischungsvolumen proportional dem pro Zeiteinheit der Begasung zugeführten Kunststoffvolumen geregelt werden. Zwar bietet die Anlage gemäss EP0638017 die Möglichkeit, ein Polymerrezyklat mit gegenüber dem Stand der Technik verminderter Anzahl an Anlagenkomponenten zu verarbeiten, ist aber dafür von der Steuerung her dementsprechend aufwändiger. Um diesen Nachteilen zu begegnen und die Anlage universeller einsetzen zu können, sowie auf dieser Anlage neben Polymerschmelzen auch treibmittelhaltige Polymerrezyklate zu verarbeiten und gleichzeitig andere Additive in der Art eines Masterbatches beizumischen, ist das Verfahren aber nur mit weiteren Investitionen in die Steuerung verwendbar.

Die vorliegende Erfindung betrifft ein Verfahren zur Wiederverwertung treibmittelbeladener Polymerpartikel, unabhängig von deren Partikelgröße und -form, zur erneuten Herstellung schäumbarer Polymerpartikel, die eine Partikelgrößenverteilung gemäß der gewünschten Spezifikationen besitzen. Treibmittelbeladen im Sinne der Erfindung heißt, dass es sich um kompakte, noch nicht einem weiterverarbeitenden Vorschäumprozess unterzogene Polymerpartikel handelt, die einen Treibmittelanteil von etwa 0.1 bis 10 Gewichtsprozent aufweisen. Bei diesen zu rezyklierenden Partikeln kann es sich entweder um off-spec Produktanteile zum Beispiel aus der Suspensionspolymerisation oder um zu lange gelagerte treibmittelhaltige Polymerpartikel handeln, aus denen wesentliche Teile des Treibmittels heraus diffundiert sind und welche demzufolge nicht mehr kommerziell vermarktet oder verwendet werden können.

Aufgabe der Erfindung ist es, eine Verbesserung zum genannten Verfahren zu schaffen, sodass Polymerpartikel mit unbekanntem Treibmittelgehalt zur Herstellung geschäumter oder schäumbarer Polymerpartikel eingesetzt werden können. Zudem ist es Aufgabe der Erfindung eine erprobte Anlage zur Herstellung von schäumbaren Polymerpartikeln, insbesondere EPS Partikeln derart zu adaptieren, dass zumindest ein Teil des eingesetzten Polymers als Polymerrezyklat zugeführt wird, das neben einem einstellbaren Treibmittelgehalt auch Additive aufweist. Diese Additive werden dem zuvor entgasten Polymerrezyklat zugesetzt und mit diesem vermischt, sodass in einem Seitenstrom ein additivhaltiges Polymerrezyklat erhalten wird, welches der Polymerschmelze nach dem Prinzip eines Masterbatch zugeführt wird.

Diese Aufgabe wird durch das nachfolgend definierte Verfahren in der zugehörigen Anlage gelöst. Mittels des Verfahrens sind somit geschäumte oder schäumbare Polymerpartikel erhältlich, die den gewünschten Spezifikationen entsprechen.

In einem Verfahren zur Herstellung geschäumter oder schäumbarer Polymerpartikel aus einer Polymerschmelze und einer Rezyklatpolymerschmelze wird zumindest ein Teil der Rezyklatpolymerschmelze aus rezyklierten, treibmittelhaltigen Polymerpartikeln erzeugt.

Gemäss des Verfahrens werden die rezyklierten, treibmittelhaltigen Polymerpartikel in einem Extruder, insbesondere einem Zwei- oder Mehrschneckenextruder, zu der Rezyklatpolymerschmelze aufgeschmolzen. In den rezyklierten, treibmittelhaltigen Polymerpartikeln enthaltenes Treibmittel wird, falls nötig, in einer Entgasungsvorrichtung aus der Rezyklatpolymerschmelze entfernt. Zu der Rezyklatpolymerschmelze wird mindestens ein Additiv (z.B. ein Flammschutzmittel, ein Keimbildner, ein Weichmacher, ein UV- oder Insektenschutzmittel, ein Treibmittel, ein Gleitmittel, ein Pigment, Graphit- oder Russpartikel, Metallpartikel oder eine Mischung der genannten Substanzen) stromabwärts der Entgasungsvorrichtung entweder in flüssiger oder fester Form oder in Form eines Masterbatches zudosiert. Dies hat den Vorteil, dass man das oder die Additive direkt, d.h. in reiner bzw. konzentrierter Form, verwenden und auf den Einsatz großer Mengen Masterbatch verzichten kann. Auf diese Weise wird das Verfahren deutlich wirtschaftlicher, da Masterbatches in der Regel sehr kostenintensiv sind. Durch das Einführen der Additive in die Rezyklatpolymerschmelze lässt sich sozusagen ein eigener Masterbatch auf Rezyklatbasis "in situ" herstellen.

Die Polymerschmelze wird entweder direkt in einer Polymerisationsanlage, welche einen Reaktor und eine Entgasungseinrichtung umfasst, oder durch Aufschmelzen von Polymergranulat in einer Aufschmelzvorrichtung erzeugt. Die Polymerschmelze wird mit einem fluiden Treibmittel beladen, sodass eine treibmittelhaltige Polymerschmelze erhalten wird, wobei das Treibmittel in einer nachfolgenden Mischvorrichtung dispergiert und homogenisiert wird. Eine Kühlung der treibmittelhaltigen Polymerschmelze erfolgt in einer Kühlvorrichtung. Die treibmittelhaltige Polymerschmelze und die additivhaltige Rezyklatpolymerschmelze werden zusammengeführt und in einer nachfolgenden Mischvorrichtung dispergiert und homogenisiert.

Die treibmittelhaltige Polymerschmelze und die Rezyklatpolymerschmelze werden gemeinsam in einem Granulierungsschritt, welcher mittels einer Granuliervorrichtung, insbesondere mittels eines Unterwasser-Granulators, durchgeführt wird, zu geschäumten oder schäumbaren Polymerpartikeln verarbeitet. Mittels der Granuliervorrichtung werden vorwiegend sphärische oder ellipsoide Partikel erzeugt.

Eine Anlage zur Herstellung geschäumter oder schäumbarer Polymerpartikel ist mit einer Einrichtung zur Verarbeitung rezyklierter, treibmittelhaltiger Polymerpartikel vorgesehen. Das Mittel umfasst einen Extruder, welcher ein Heizmittel zur Erzeugung einer Rezyklatpolymerschmelze aus den rezyklierten, treibmittelhaltigen Polymerpartikeln enthält. Eine Entgasungsvorrichtung ist zur Entgasung der Rezyklatpolymerschmelze vorgesehen. Eine Mischvorrichtung zur Durchmischung der Rezyklatpolymerschmelze ist vorgesehen, sodass eine im wesentlichen homogene Rezyklatpolymerschmelze erhältlich ist. Der Extruder ist als Seitenextruder ausgeführt. Stromabwärts der Entgasungsvorrichtung ist eine Dosiervorrichtung zur Versetzung der Rezyklatpolymerschmelze mit mindestens einem Additiv (z.B. ein Flammschutzmittel, ein Keimbildner, ein Weichmacher, ein UV- oder Insektenschutzmittel, ein Treibmittel, ein Gleitmittel, ein Pigment, Graphit- oder Russpartikel, Metallpartikel oder eine Mischung der genannten Substanzen) vorgesehen. Die Anlage umfasst eine Polymerisationsanlage zur Herstellung einer Polymerschmelze, wobei die Polymerisationsanlage einen Reaktor und eine Entgasungseinrichtung oder eine Aufschmelzvorrichtung zur Herstellung der Polymerschmelze durch Aufschmelzen von Polymergranulat aufweist. Eine Zuleitungsvorrichtung sowie eine Mischvorrichtung und/oder eine Kühlvorrichtung sind stromabwärts der Polymerisationsanlage oder der Aufschmelzvorrichtung zur Dosierung eines Treibmittels vorgesehen, wobei die Mischvorrichtung einen statischen Mischer und die Kühlvorrichtung einen statischen Mischer/Wärmetauscher enthält. Ein statischer Mischer/Wärmetauscher ist ein Apparat, der im Grundsatz ähnlich wie ein üblicher Rohrbündelwärmetauscher aufgebaut ist, dessen Einbauten jedoch eine verstärkte Mischwirkung des kühlenden Mediums aufweisen. Dies lässt sich zum Beispiel durch die Ausgestaltung und Anordnung der das Kühlmedium enthaltenden Rohre oder durch zusätzliche Leitbleche erzielen. Typische Vertreter solcher Mischer/Wärmetauscher sind zum Beispiel in den Patentschriften EP1067352B1, EP0009638 und EP1268026 beschrieben.

Eine Mischvorrichtung und/oder eine Kühlvorrichtung ist vorgesehen, zu welcher die additivhaltige Rezyklatpolymerschmelze und die treibmittelhaltige Polymerschmelze zuführbar und gemeinsam durchmischbar sind. Die Mischvorrichtung enthält einen statischen Mischer, die Kühlvorrichtung einen statischen Mischer/Wärmetauscher.

Ein geschäumtes oder schäumbares Polymerpartikel, erhältlich durch das vorher beschriebene Verfahren, besteht aus einer Mischung einer Rezyklatpolymerschmelze aus rezyklierten, treibmittelhaltigen Polymerpartikeln und einer treibmittelhaltigen Polymerschmelze, wobei der Anteil an Rezyklatpolymerschmelze zwischen 0,5 und 100% liegt. Die Rezyklatpolymerschmelze besteht aus einem sortenreinen treibmittelhaltigen Polymer. Die Rezyklatpolymerschmelze und/oder die treibmittelhaltige Polymerschmelze enthalten ein Additiv. Das Additiv umfasst ein Flammschutzmittel, ein Gleitmittel, einen Keimbildner, einen Weichmacher, ein UV-Schutzmittel, ein Insektenschutzmittel, ein Pigment und/oder Graphit- und/oder Russpartikel und/oder Metallpartikel, einen Masterbatch, oder eine Mischung der genannten Substanzen.

Nachfolgend wird die Erfindung anhand der Zeichnungen erläutert. Es zeigt:

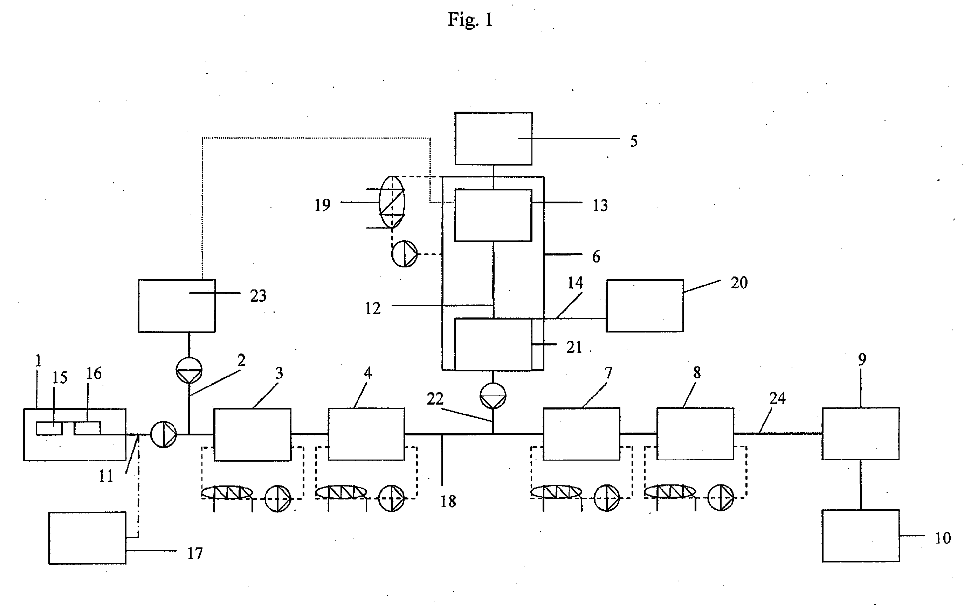

- Fig. 1: eine schematische Darstellung einer Anlage zur Herstellung von geschäumten oder schäumbaren Polymerpartikeln

Mit einer erfindungsgemässen Anlage, wie sie in Fig. 1 schematisch dargestellt ist, wird folgendes Verfahren durchgeführt:

Bei dem Verfahren zur Herstellung geschäumter oder schäumbarer Polymerpartikel 10 aus einer Polymerschmelze 11 und einer Rezyklatpolymerschmelze 12 wird zumindest ein Teil der Rezyklatpolymerschmelze 12 aus rezyklierten, treibmittelhaltigen Polymerpartikeln 5 erzeugt. Zur Durchführung des Verfahrenschritts ist ein Mittel zur Verarbeitung rezyklierter, treibmittelhaltiger Polymerpartikel 5 vorgesehen. Gemäss eines vorteilhaften Ablaufs des Verfahrens werden die rezyklierten, treibmittelhaltigen Polymerpartikel 5 in einem Extruder 6, insbesondere einem Zwei- oder Mehrschneckenextruder, zu der Rezyklatpolymerschmelze 12 aufgeschmolzen. In den rezyklierten, treibmittelhaltigen Polymerpartikeln 5 enthaltenes Treibmittel wird gegebenenfalls in einer Entgasungsvorrichtung 13 aus der Rezyklatpolymerschmelze entfernt. Zu der Rezyklatpolymerschmelze 12 wird ein Additiv 14 stromabwärts der Entgasungsvorrichtung 13 entweder in flüssiger oder fester Form oder in Form eines Masterbatches zudosiert.

Gemäss einer weiteren Verfahrensvariante umfasst das Mittel eine Fördervorrichtung (die in der Abbildung nicht dargestellt ist), mittels welcher auch ein kompaktiertes Granulat eines bereits aufgeschäumten Kunststoffs, welcher als geschäumter Polymerartikel vorliegt, rezykliert werden kann. Das kompaktierte Granulat wird durch Schreddern des geschäumten Polymerartikels erhalten. Durch den Verfahrensschritt des Schredderns werden rezyklierte Polymerpartikel 5 erzeugt, die in einem nachfolgenden Verfahrensschritt kompaktiert werden. Die Dichte wird erhöht, sodass die rezyklierten Polymerpartikel 5 als kompaktiertes Granulat vorliegen. Das kompaktierte Granulat wird in der Fördervorrichtung zu dem Extruder 6 transportiert, in welchem die weiteren, oben beschriebenen Verfahrensschritte ablaufen.

Nach einer weiteren Verfahrensvariante umfasst das Mittel eine Fördervorrichtung für Polymerrezyklat, welches in einem Lösemittel gelöst ist. Die rezyklierten Polymerpartikel 5 liegen in diesem Fall bereits als flüssige Lösung vor, sodass der Schritt des Aufschmelzens entfallen kann. In den rezyklierten Polymerpartikeln 5 enthaltenes Treibmittel wird gegebenenfalls in einer Entgasungsvorrichtung 13, welche für die Verarbeitung von Lösungen, die rezyklierte, treibmittelhaltige Polymerpartikel 5 enthalten, geeignet ist, gemeinsam mit dem Lösemittel aus der Rezyklatpolymerschmelze entfernt.

Selbstverständlich lassen sich die obigen Verfahrensvarianten auch kombinieren, so dass eine beliebige Mischung aus rezyklierten, treibmittelhaltigen Polymerpartikeln 5, kompaktiertem Granulat eines bereits aufgeschäumten Kunststoffs sowie Polymerrezyklat, welches in einem Lösemittel gelöst vorliegt, verarbeitet werden kann.

Mittels der Entgasungsvorrichtung 13 wird der Rezyklatpolymerschmelze bzw. der Lösung mit den rezyklierten, treibmittelhaltigen Polymerpartikeln Treibmittel und/oder Lösemittel entzogen. Vorteilhafterweise wird der Druck in der Rezyklatpolymerschmelze erniedrigt, sodass das in der Rezyklatpolymerschmelze in gelöster Form vorliegende Treibmittel nukleiert und sich Bläschen bilden. Insbesondere wird die Entgasungsvorrichtung 13 unter Vakuumbedingungen bei Drücken in einem Bereich von 30 bis 100 mbar betrieben.

Die Polymerschmelze 11 wird entweder direkt in einer Polymerisationsanlage 1, welche einen Reaktor 15 und eine Entgasungseinrichtung 16 umfasst, oder durch Aufschmelzen von Polymergranulat in einer Aufschmelzvorrichtung 17 erzeugt. Die Polymerschmelze 11 wird mit einem fluiden Treibmittel 2 beladen, sodass eine treibmittelhaltige Polymerschmelze 18 erhalten wird, wobei das Treibmittel 2 in einer nachfolgenden Mischvorrichtung 3 dispergiert und homogenisiert wird. Eine Kühlung der treibmittelhaltigen Polymerschmelze erfolgt in einer Kühlvorrichtung 4. Die treibmittelhaltige Polymerschmelze 18 und die Rezyklatpolymerschmelze 12 werden zusammengeführt und in einer nachfolgenden Mischvorrichtung 7 dispergiert und homogenisiert.

Die treibmittelhaltige Polymerschmelze 18 und die Rezyklatpolymerschmelze 12 werden gemeinsam in einem Granulierungsschritt, welcher mittels einer Granuliervorrichtung 9, insbesondere mittels eines Unterwasser-Granulators, durchgeführt wird, zu geschäumten oder schäumbaren Polymerpartikeln 10 verarbeitet. Mittels der Granuliervorrichtung 9 werden vorwiegend sphärische oder ellipsoide Partikel erzeugt. Dabei wird ein Partikel mit zumindest annähernd ellipsoidaler Geometrie als ellipsoid bezeichnet, wenn auf einem durch dessen Schwerpunkt unter der Annahme homogener Massenverteilung gelegtes orthogonales Koordinatensystem auf der ersten Achse (x-Achse) eine Abmessung a, auf der zweiten Achse (y-Achse) eine Abmessung b und auf der dritten Achse (z-Achse) eine Abmessung c messbar sind und das Verhältnis der längsten Abmessung a zu der kürzesten Abmessung (b oder c) grösser als 1,25 ist. Die Abmessungen a, b, c werden auch als Halbachsen des Ellipsoids bezeichnet. Ist das Verhältnis der grössten Abmessung a zur kürzesten Abmessung (b oder c) kleiner oder gleich 1,25, wird das Partikel als sphärisch bezeichnet. Die vorwiegend sphärischen oder ellipsoiden Partikel unterscheiden sich bei Verwendung eines Unterwasser-Granulators gemäss der Erfindung von Partikeln aus anderen Herstellungsverfahren, insbesondere der Suspensionspolymerisation, dadurch, dass sie eine Schnittkante aufweisen, die vom Schneidvorgang herrührt und z.B. unter einem Mikroskop sichtbar ist.

Um diese Schnittkanten zu entfernen, sowie die Rundheit der Partikel zu verbessern, kann dem Granulierschritt eine thermische Behandlung der Partikel folgen. Diese thermische Behandlung kann sich auch vorteilhaft auf die spätere Schaumstruktur auswirken. Die thermische Behandlung besteht im Wesentlichen aus einem Halten der Partikel bei einer bestimmten Temperatur und einem bestimmtem Druck, so dass ein Aufschäumen der Partikel, welche treibmittelbeladen sind, verhindert wird. Die Temperatur sollte zwischen 50 und 150 °C, bevorzugt zwischen 70° und 120°C, liegen. Je nach verwendeter Temperatur ist dann ein Druck von 10 bis 20 bar nötig, um ein Aufschäumen der Partikel zu verhindern. Die Dauer der thermischen Behandlung liegt zwischen 1 und 60 Minuten, bevorzugt zwischen 1 und 30 Minuten, besonders bevorzugt zwischen 5 und 20 Minuten. Die Behandlung kann entweder ansatzweise in einem Rührkessel oder kontinuierlich direkt im Anschluss an die Granulierung, im Falle der Unterwasser-Granulierung bevorzugt noch im selben Wasserkreislauf und vor der Trocknung stattfinden. Dem Wasser können bestimmte oberflächenaktive Additive, zum Beispiel Polyvinylalkohol, beigemischt werden, um ein Verkleben der Partikel während der thermischen Behandlung zu vermeiden. Der Feststoffanteil während der Behandlung sollte ca. 30-50% betragen.

Eine Anlage zur Herstellung geschäumter oder schäumbarer Polymerpartikel 10 ist mit einem Mittel zur Verarbeitung rezyklierter, treibmittelhaltiger Polymerpartikel 5 vorgesehen. Das Mittel umfasst einen Extruder 6, welcher ein Heizmittel 19 zur Erzeugung einer Rezyklatpolymerschmelze 12 aus den rezyklierten, treibmittelhaltigen Polymerpartikeln 5 enthält. Eine Entgasungsvorrichtung 13 ist zur optionalen Entgasung der Rezyklatpolymerschmelze 12 vorgesehen. Eine Mischvorrichtung 21 zur Durchmischung der Rezyklatpolymerschmelze 12 ist vorgesehen, sodass eine im Wesentlichen homogene Rezyklatpolymerschmelze 22 erhältlich ist. Der Extruder 6 ist als Seitenextruder ausgeführt.

Der Extruder 6 umfasst optional eine Entgasungsvorrichtung 13, mittels welcher der bereits vorher beschriebene Verfahrensschritt der Entgasung durchgeführt wird. Dies kann erforderlich sein, wenn die Menge an Treibmittel, die mit dem Seitenstrom 22 der Polymerschmelze 11 zugeführt wird, insgesamt so gross und/oder in der Konzentration variierend wäre, dass es zu nicht mehr vernachlässigbaren Konzentrationsschwankungen an Treibmittel in der Polymerschmelze 24 kommt. Im Anschluss an die Entgasung ist die Rezyklatpolymerschmelze im Wesentlichen frei von Treibmittel.

Stromabwärts der Entgasungsvorrichtung 13 ist eine Dosiervorrichtung 20 zur Versetzung der Rezyklatpolymerschmelze 12 mit einem Additiv 14 vorgesehen. Besonders vorteilhaft ist die Verwendung eines Zwei- oder Mehrschneckenextruders als Seitenextruder 6, weil das Additiv 14, wobei es sich auch um ein Gemisch von Additiven handeln kann, mit der Rezyklatpolymerschmelze direkt vermischt werden können, wodurch der Eintrag des Additivs 14 oder eines Gemisches derselben erleichtert ist. Diese Verfahrensweise ist deutlich wirtschaftlicher als der Einsatz eines zugekauften Masterbatches, da letzterer in der Regel zu kostspielig für ein wirtschaftliches Betreiben des erfindungsgemäßen Verfahrens wäre.

Die Anlage umfasst eine Polymerisationsanlage 1 zur Herstellung einer Polymerschmelze 11, wobei die Polymerisationsanlage 1 einen Reaktor 15 und eine Entgasungseinrichtung 16 oder eine Aufschmelzvorrichtung 17 zur Herstellung der Polymerschmelze 11 durch Aufschmelzen von Polymergranulat aufweist. Eine Zuleitungsvorrichtung 23 sowie eine Mischvorrichtung 3 und/oder eine Kühlvorrichtung 4 sind stromabwärts der Polymerisationsanlage 1 oder der Aufschmelzvorrichtung 17 zur Dosierung eines Treibmittels 2 vorgesehen. Über eine Anlagensteuerung kann die Menge an Treibmittel 2 automatisch derart angepasst werden, dass die Treibmittelbeladung in der Polymerschmelze 24 (Summe der Polymerschmelze 11 und der Rezyklatpolymerschmelze 12) der gewünschten Treibmittelbeladung entspricht. Die Mischvorrichtung 3 enthält einen statischen Mischer, die Kühlvorrichtung 4 einen statischen Mischer/Wärmetauscher. Eine Mischvorrichtung 7 und/oder eine Kühlvorrichtung 8 ist vorgesehen, zu welcher die additivhaltige Rezyklatpolymerschmelze 22 und die treibmittelhaltige Polymerschmelze 18 zuführbar und gemeinsam durchmischbar sind. Die Mischvorrichtung 7 enthält einen statischen Mischer mittels welchem die aus der treibmittelhaltigen Polymerschmelze 18 und der Rezyklatpolymerschmelze 22 bestehende Polymerschmelze 24 erzeugt wird, der eine im Wesentlichen homogene Verteilung von Treibmittel 2, sowie Additiv(en) 14 aufweist. Dabei soll die Erwähnung eines statischen Mischers nicht als Beschränkung auf einen einzigen statischen Mischer verstanden werden, sondern kann auch mehrere parallel oder hintereinander geschaltete statische Mischer umfassen. Mittels des oder der statischen Mischer sollen möglichst geringe Scherkräfte auf die Polymerschmelze und/oder Rezyklatpolymerschmelze übertragen werden.

Im Anschluss an die Mischvorrichtung 7 erfolgt eine Kühlung der Polymerschmelze 24, welche aus Polymerschmelze 18 und Rezyklatpolymerschmelze 22 besteht, in der Kühlvorrichtung 8, welche einen statischen Mischer/Wärmetauscher enthält. Im Anschluss an die Kühlvorrichtung 8 wird die Polymerschmelze 24 in einer Granuliervorrichtung 9, beispielsweise einem Unterwassergranulator, zu geschäumten oder schäumbaren Polymerpartikeln 10, insbesondere zu sphärischem oder elipsoidem Granulat, geformt. Die Polymerschmelze 24 wird über eine Düsenplatte geführt, die zumeist mehrere Bohrungen enthält. Beim Durchtritt durch eine derartige Bohrung bildet sich ein Polymerstrang aus. Die Anlagensteuerung steuert zur Durchführung des Granulierschritts ein Schneidmittel, welches unmittelbar nach der Düsenplatte angeordnet ist und mittels welchem der Polymerstrang periodisch durchtrennbar ist, sodass aus dem Polymerstrang geschäumte oder schäumbare Polymerpartikel 10 erzeugbar sind. Der Granulierschritt wird im Unterwassergranulator mit einer Flüssigkeit (vorzugsweise Wasser, aber beispielsweise auch Solen) durchgeführt, die im Unterwassergranulator als Kühl- und Transportmittel für das Granulat verwendet ist. Mit der beim Granulierschritt verwendeten Flüssigkeit kann auch ein erhöhter Druck ausgeübt werden, wodurch eine Blähwirkung des Treibmittels im noch nicht verfestigten Granulat zumindest teilweise unterdrückt werden kann. Gleichzeitig wird der Polymerstrang sowie das Granulat einer Abkühlung unterworfen, sodass sich der als Schmelze vorliegende Polymerstrang verfestigt und die Verteilung der Additive im Polymerstrang und in dem als Granulat vorliegenden geschäumten oder schäumbaren Polymerpartikel "eingefroren" wird.

Mittels der Anlagensteuerung wird zudem die Schmelzeviskosität als Parameter der Polymerschmelze 24, sowie ein vorgegebenes Temperatur- und Druckprofil in der Mischvorrichtung 7, sowie der Kühlvorrichtung 8, sowie auch den stromaufwärts liegenden Anlagenteilen zur Generierung der Polymerschmelze 18 und der Rezyklatpolymerschmelze 22 geregelt. Diese Parameter der Polymerschmelze 24 sowie der vorhin beschriebenen Anlagenteile dienen der Optimierung der Homogenität von Treibmittel und Additiven in der Polymerschmelze 24 sowie einer idealen Granulierfähigkeit.

Bei Verwendung der Unterwassergranulierung als Granulierverfahren kommt es häufig zu Instabilitätsproblemen an der Lochplatte, die darauf beruhen, dass sich durch eine verstärkte Abkühlung auf der Flüssigkeitsseite die Polymerschmelze 24 in einem oder mehreren Löchern verfestigt. Dies hat zur Folge, dass die geschäumten oder schäumbaren Polymerpartikel 10 uneinheitliche Abmessungen aufweisen und nicht mehr den gewünschten Spezifikationen entsprechen. Um dieses "Einfrieren" der Bohrungen zu verhindern, muss einerseits dafür gesorgt werden, dass für alle Düsen die Temperaturen (Temperaturfelder) gleich sind. Dies geschieht mit Hilfe einer präzise durch die Anlagensteuerung 1 kontrollierten Lochplattenheizung, die entweder aus einer Ölheizung, einer elektrischen Heizung, oder einer Kombination von beiden bestehen kann. Im Falle einer elektrischen Heizung ist die Lochplatte von einer Vielzahl von Heizpatronen durchsetzt, die für ein einheitliches Temperaturprofil sorgen.

Zusätzlich kann die Lochplatte wasserseitig derart beschichtet sein, dass ein Abkühlen der Lochplatte an der Oberfläche, und somit Wärmeverluste, die zum Einfrieren der Löcher führen, vermieden oder zumindest minimiert werden können. Diese Beschichtung kann beispielsweise aus Keramik oder aus einer Kombination verschiedener Metalle oder Metalloxide beschaffen sein.

Andererseits muss die Polymerschmelze beim Eintritt in die Lochplatte eine Temperatur und einen Druck annehmen, deren Wert in Bezug auf den Betriebszustand der Anlage eingestellt werden muss. Durch die Anlagensteuerung 1 wird die Temperatur T und der Druck p am Eintritt in die Lochplatte so beeinflusst, dass diese Parameter Werte annehmen, die möglichst nahe bei Sollwerten sind.

Der Wasserkreislauf des Unterwasser-Granulators kann derart ausgeführt sein, dass die im Granulierschritt erzeugten Partikel noch vor der Trocknung bei einer bestimmten Temperatur einer bestimmten Verweilzeit ausgesetzt werden, die der thermischen Behandlung der Partikel zur Verbesserung der Form oder des Schaumverhaltens dient. Dieses Ergebnis kann entweder durch eine Querschnittserweiterung oder durch eine längere, gerade oder gewundene Rohrleitung erreicht werden. Um die Temperatur auf das gewünschte Niveau zu bringen, kann ein Wärmetauscher in die Rohrleitung eingebaut werden oder die erwähnte Querschnittserweiterung kann in Form eines Reaktionsrohres mit innenliegenden Wärmetauscherrohren, z.B. einem Sulzer SMR^{™} Reaktor, vorgesehen werden. Auch eine direkte Beheizung z.B. durch Zufuhr von Dampf über eine Düse ist möglich.

Es lassen sich diverse geschäumte oder schäumbare Polymerpartikel 10 produzieren (abhängig vom Durchmesser und der Anzahl der Bohrungen, der Rotationsgeschwindigkeit und Anzahl der Schneidmittel und dem Flüssigkeitsdruck am Austritt der Bohrungen), wobei insbesondere das Granulat in Form von "Pellets" oder "Beads" oder als ein partiell geschäumtes Granulat erzeugt sein kann. Durch Optimierung der genannten Parametereinstellungen können geschäumte oder schäumbare Polymerpartikel bevorzugt in zumindest annähernd sphärischer oder elliptischer Gestalt erzeugt werden.

Bei Verwendung von gasförmigen resp. überkritischen Treibmitteln, wie zum Beispiel Stickstoff oder Kohlendioxid, können die geschäumten oder schäumbaren Polymerpartikel 10 auch direkt am Austritt aus der Lochplatte teilweise oder vollständig aufgeschäumt werden. Die Prozessparameter in der Granulierung und nachfolgenden Trocknung sind entsprechend anzupassen.

Neben Polystyrol können auch andere Kunststoffe zur Herstellung der geschäumten oder schäumbaren Polymerpartikeln 10 eingesetzt werden. Beispiele sind: Styrol-Copolymere, schlagfestes Polystyrol, Polyolefine, insbesondere Polyethylen sowie Polypropylen, biologisch abbaubare Polymere, oder ein Gemisch dieser Stoffe.

Ein geschäumtes oder schäumbares Polymerpartikel 10, erhalten durch das vorher beschriebene Verfahren, besteht aus einer Mischung einer Rezyklatpolymerschmelze (12,22) aus rezyklierten, treibmittelhaltigen Polymerpartikeln 5 und einer treibmittelhaltigen Polymerschmelze 18, wobei der Anteil an Rezyklatpolymerschmelze zwischen 0,5 und 100% liegt. Die Rezyklatpolymerschmelze (12,22) besteht aus einem sortenreinen treibmittelhaltigen Polymer. Die Rezyklatpolymerschmelze (12,22) und/oder die treibmittelhaltige Polymerschmelze 18 enthalten ein Additiv 14. Das Additiv 14 umfasst ein Flammschutzmittel, ein Gleitmittel, einen Keimbildner, einen Weichmacher, ein UV-Schutzmittel, ein Insektenschutzmittel, ein Pigment und/oder Graphit- und/oder Russpartikel und/oder Metallpartikel, einen Masterbatch, sowie eine Mischung der genannten Substanzen. Die Additive können in hochkonzentrierter, in reiner oder in Form eines Masterbatches zugegeben werden.

Sind in den rezyklierten, treibmittelhaltigen Polymerpartikeln 5 bromhaltige Flammschutzmittel oder andere thermisch labile Additive vorhanden oder werden solche Additive 14 später zugesetzt, darf die Prozesstemperatur im Extruder 6, sowie in allen nachfolgenden Anlagenkomponenten einen Temperatur- und Verweilzeitgrenzwert, der durch die thermische Stabilität der Substanz definiert ist, nicht überschreiten.

Die erfindungsgemäß hergestellten geschäumten oder schäumbaren Polymerpartikel verfügen über eine mehr oder weniger ausgeprägte Schnittkante, die vom Schneidprozess während der Unterwasser-Granulierung herrührt. Um diese Schnittkante zu entfernen und die Rundheit der Partikel im Allgemeinen zu verbessern, können die treibmittelhaltigen Partikel einer thermischen Behandlung ausgesetzt werden. Diese thermische Behandlung dient auch dazu, die Schäumeigenschaften der Partikeln zu verbessern.

## Patentansprüche

1. Verfahren zur Herstellung geschäumter oder schäumbarer Polymerpartikel (10) aus einer Polymerschmelze (11) und einer Rezyklatpolymerschmelze (12), bei welchem zumindest ein Teil der Rezyklatpolymerschmelze (12) aus rezyklierten, treibmittelhaltigen Polymerpartikeln (5) erzeugt wird umfassend die Schritte des Aufschmelzens der rezyklierten, treibmittelhaltigen Polymerpartikel (5) in einem Extruder (6), insbesondere einem Zwei- oder Mehrschneckenextruder, mittels eines Heizmittels (19) zu der Rezyklatpolymerschmelze (12), Entfernen von in den rezyklierten, treibmittelhaltigen Polymerpartikeln (5) enthaltenem Treibmittel aus der Rezyklatpolymerschmelze (12) in einer Entgasungsvorrichtung (13) wobei die Polymerschmelze (11) entweder direkt in einer Polymerisationsanlage (1), welche einen Reaktor (15) und eine Entgasungseinrichtung (16) umfasst, oder durch Aufschmelzen von Polymergranulat in einer Aufschmelzvorrichtung (17) erzeugt wird, wobei die Polymerschmelze (11) mit einem fluiden Treibmittel (2) beladen wird, sodass eine treibmittelhaltige Polymerschmelze (18) erhalten wird, wobei das Treibmittel (2) in einer nachfolgenden Mischvorrichtung (3) dispergiert und homogenisiert wird, und eine Kühlung der treibmittelhaltigen Polymerschmelze in einer Kühlvorrichtung (4) erfolgt, **dadurch gekennzeichnet, dass** der Extruder als Seitenextruder ausgeführt ist, sodass im Anschluss die Rezyklatpolymerschmelze (12) und die Polymerschmelze (11) zu einer Polymerschmelze (24) zusammengeführt werden, in einer nachfolgenden Mischvorrichtung (7) dispergiert und homogenisiert und anschliessend zu geschäumten oder schäumbaren Polymerpartikeln weiterverarbeitet werden.

2. Verfahren nach Anspruch 1, wobei zu der Rezyklatpolymerschmelze (12) ein Additiv (14) stromabwärts der Entgasungsvorrichtung (13) entweder in flüssiger oder fester Form oder in Form eines Masterbatches zudosiert wird.

3. Verfahren nach Anspruch 1 oder 2, wobei die treibmittelhaltige Polymerschmelze (18) und die Rezyklatpolymerschmelze (12) gemeinsam in einem Granulierungsschritt, welcher mittels einer Granuliervorrichtung (9), insbesondere mittels eines Unterwasser-Granulators, durchgeführt wird, zu geschäumten oder schäumbaren Polymerpartikeln (10) verarbeitet werden.

4. Verfahren nach Anspruch 3, wobei mittels der Granuliervorrichtung (9) vorwiegend sphärische oder ellipsoid Partikel erzeugt werden.

5. Verfahren nach Anspruch 4, wobei die sphärischen oder ellipsoiden Partikel über eine Schnittkante verfügen.

6. Verfahren nach einem der vorhergehenden Ansprüche, umfassend einen kontinuierlich oder ansatzweise durchgeführten thermischen Behandlungsschritt der erzeugten Partikel, um die Rundheit der Partikel sowie die Schäumeigenschaften zu verbessern.

7. Anlage zur Herstellung geschäumter oder schäumbarer Polymerpartikel (10), umfassend einen Extruder (6) zur Verarbeitung rezyklierter, treibmiftelhaltiger Polymerpartikel (5), welcher ein Heizmittel (19) zur Erzeugung einer Rezyklatpolymerschmelze (12) aus den rezyklierten, treibmittelhaltigen Polymerpartikeln (5) und eine Entgasungsvorrichtung (13) zur Entgasung der Rezyklatpolymerschmelze (12) enthält, wobei eine Mischvorrichtung (21) zur Durchmischung der Rezyklatpolymerschmelze (12) vorgesehen ist, sodass eine im wesentlichen homogene Rezyklatpolymerschmelze (22) erhältlich ist, sowie eine Polymerisationsanlage (1) zur Herstellung einer Polymerschmelze (11), wobei die Polymerisationsanlage (1) einen Reaktor (15) und eine Entgasungseinrichtung (16) aufweist, oder eine Aufschmelzvorrichtung (17) zur Herstellung der Polymerschmelze (11) durch Aufschmelzen von Polymergranulat aufweist, sowie eine Mischvorrichtung (3) und eine Kühlvorrichtung (4) vorgesehen sind, wobei eine Zuleitungsvorrichtung (23) stromabwärts der Polymerisationsanlage (1) oder der Aufschmelzvorrichtung (17) zur Dosierung eines Treibmittels (2) vorgesehen ist, **dadurch gekennzeichnet, dass** der Extruder (6) als Seitenextruder ausgeführt ist und stromabwärts des Seitenextruders eine Mischvorrichtung (7) und/oder eine Kühlvorrichtung (8) vorgesehen ist, welcher die additivhaltige Rezyklatpolymerschmelze (22) und die treibmittelhaltige Polymerschmelze (18) gemeinsam zuführbar sind.

8. Anlage nach Anspruch 7, wobei stromabwärts der Entgasungsvorrichtung (13) eine Dosiervorrichtung (20) zur Versetzung der Rezyklatpolymerschmelze (12) mit einem Additiv (14) vorgesehen ist.

9. Anlage nach Ansprüchen 7 oder 8, wobei die Mischvorrichtung (3) und/oder die Mischvorrichtung 7 einen statischen Mischer oder die Kühlvorrichtung (4) und/oder die Kühlvorrichtung (8) einen statischen Mischer/Wärmetauscher enthält.

## Claims

1. A method for the manufacture of foamed or foamable polymer particles (10) from a polymer melt (11) and from a recycling polymer melt (12), in which at least one part of the recycling polymer melt (12) is produced from recycled, propellant-containing polymer particles (5), including the steps of the melting of the recycled, propellant-containing polymer particles (5) in an extruder (6), in particular in a twin screw extruder or multiple screw extruder, by means of a heating device (19) to form the recycling polymer melt (12), removing of the propellant contained in the recycled, propellant-containing polymer particles (5) from the recycling polymer melt (12) in a degasification apparatus (13) with the polymer melt (11) being produced either directly in a polymerisation plant (1) which includes a reactor (15) and a degasification apparatus (16) or by melting of polymer granulate in a melting apparatus (17), wherein the polymer melt (11) is loaded with a fluid propellant (2), so that a propellant-containing polymer melt (18) is obtained, with the propellant (2) being dispersed and homogenised in a following mixing apparatus (3) and with a cooling of the propellant-containing polymer melt taking place in a cooling apparatus (4), **characterised in that** the extruder is designed as a side extruder, so that the recycling polymer melt (12) and the polymer melt (11) are subsequently combined to a polymer melt (24), are dispersed and homogenised in a following mixing apparatus (7) and subsequently processed to foamed or foamable polymer particles.

2. A method in accordance with claim 1, wherein an additive (14) is added in metered amount to the recycling polymer melt (12) downstream of the degasification apparatus (13), either in liquid or in solid form or in the form of a master batch.

3. A method in accordance with claim 1 or claim 2, wherein the propellant-containing polymer melt (18) and the recycling polymer melt (12) are processed together in a granulating step, which is carried out by means of a granulating apparatus (9), in particular by means of an underwater granulator, to form foamed or foamable polymer particles (10).

4. A method in accordance with claim 3, wherein predominantly spherical or ellipsoid particles are produced by means of the granulating apparatus (9).

5. A method according to claim 4, wherein the spherical or ellipsoid particles comprise a cutting edge.

6. A method in accordance with one of the preceding claims, comprising a continuous or batch-type thermal treatment of the produced particles for improving the roundness of the particles as well as the foaming characteristics.

7. A plant for the manufacture of foamed or foamable polymer particles (10) including an extruder (6) for the processing of recycled, propellant-containing polymer particles (5), which contains a heating means (19) for the production of a recycling polymer melt (12) from the recycled, propellant-containing polymer particles (5) and a degasification apparatus (13) for the degasification of the recycling polymer melt (12), wherein a mixing apparatus (21) is provided for the through mixing of the recycling polymer melt (12), so that an essentially homogenous recycling polymer melt (22) can be obtained, and also a polymerisation plant (1) for the manufacture of a polymer melt (11), wherein the polymerisation plant (1) has a reactor (15) and a degasification apparatus (16), or has a melting apparatus (17) for the manufacture of the polymer melt (11) by melting of polymer granulate, and also a mixing apparatus (3) and a cooling apparatus are provided, wherein a supply apparatus (23) is provided downstream of the polymerisation plant (1) or of the melting apparatus (7) for the metering of a propellant (2), **characterised in that** the extruder (6) is designed as a side extruder and a mixing apparatus (7) and/or a cooling apparatus (8) is provided downstream of the side extruder to which the additive-containing recycling polymer melt (22) and the propellant-containing polymer melt (18) can be jointly fed.

8. A plant in accordance with claim 7, wherein a metering apparatus (20) is provided downstream of the degasification apparatus (13) for the mixing of the recycling polymer melt (12) with an additive (14).

9. A plant in accordance with claims 7 or claim 8, wherein the mixing apparatus (3) and/or the mixing apparatus (7) is a static mixer or the cooling apparatus (4) and/or the cooling apparatus (8) contains a static mixer/heat exchanger.

## Revendications

1. Procédé de fabrication de particules polymères expansées ou expansibles (10) à partir d'une fonte polymère (11) et d'une fonte polymère recyclée (12), dans lequel au moins une partie de la fonte polymère recyclée (12) est produite à partir de particules polymères recyclées contenant un produit moussant (5), comprenant les étapes consistant à faire fondre les particules polymères recyclées contenant un produit moussant (5) dans une extrudeuse (6), en particulier une extrudeuse à deux ou plusieurs vis, au moyen d'un moyen de chauffage (19), pour obtenir la fonte polymère recyclée (12), retirer le produit moussant contenu dans les particules polymères recyclées contenant un produit moussant (5) de la fonte polymère recyclée (12) dans un dispositif de dégazage (13), la fonte polymère (11) étant produite, soit directement dans une installation de polymérisation (1) comprenant un réacteur (15) et un système de dégazage (16), soit en faisant fondre un granulat polymère dans un dispositif de fusion (17), la fonte polymère (11) étant chargée d'un produit moussant fluide (2) de sorte qu'une fonte polymère contenant un produit moussant (18) est obtenue, le produit moussant (2) étant dispersé et homogénéisé dans un dispositif de mélange (3) placé en aval, et un refroidissement de la fonte polymère contenant un produit moussant ayant lieu dans un dispositif de refroidissement (4), **caractérisé en ce que** l'extrudeuse est réalisée comme une extrudeuse latérale de sorte que par la suite, la fonte polymère recyclée (12) et la fonte polymère (11) sont réunies en une fonte polymère (24), sont dispersées et homogénéisées dans un dispositif de mélange (7) placé en aval, et sont ensuite transformées en particules polymères expansées ou expansibles.

2. Procédé selon la revendication 1, dans lequel on ajoute à la fonte polymère recyclée (12) une dose d'un additif (14) en aval du dispositif de dégazage (13), sous forme liquide ou solide ou sous forme de mélange-mère.

3. Procédé selon les revendications 1 ou 2, dans lequel la fonte polymère contenant un produit moussant (18) et la fonte polymère recyclée (12) sont traitées ensemble en particules polymères expansées ou expansibles (10) au cours d'une étape de granulation effectuée au moyen d'un dispositif de granulation (9), en particulier au moyen d'un granulateur immergé.

4. Procédé selon la revendication 3, dans lequel on produit des particules surtout sphériques ou ellipsoïdales au moyen du dispositif de granulation (9).

5. Procédé selon la revendication 4, dans lequel les particules sphériques ou ellipsoïdales disposent d'une arête de coupe.

6. Procédé selon l'une quelconque des revendications précédentes, comprenant une étape de traitement thermique des particules produites, effectuée en continu ou en partie, afin d'améliorer la sphéricité des particules ainsi que les propriétés moussantes.

7. Installation de fabrication de particules polymères expansées ou expansibles (10), comprenant une extrudeuse (6) pour le traitement de particules polymères recyclées contenant un produit moussant (5), ladite extrudeuse comprenant un moyen de chauffage (19) pour produire une fonte polymère recyclée (12) a partir des particules polymères recyclées contenant un produit moussant (5) et un dispositif de dégazage (13) pour dégazer la fonte polymère recyclée (12), un dispositif de mélange (21) étant fourni pour mélanger complètement la fonte polymère recyclée (12) de sorte qu'il est possible d'obtenir une fonte polymère recyclée substantiellement homogène (22), ainsi qu'une installation de polymérisation (1) pour fabriquer une fonte polymère (11), dans laquelle l'installation de polymérisation (1) présente un réacteur (15) et un système de dégazage (16), ou bien présente un dispositif de fusion (17) pour fabriquer la fonte polymère (11) par fusion d'un granulat polymère, et un dispositif de mélange (3) et un dispositif de refroidissement (4) sont prévus, dans laquelle un dispositif d'amenée (23) est prévu en aval de l'installation de polymérisation (1) ou du dispositif de fusion (17) pour le dosage d'un produit moussant (2), **caractérisée en ce que** l'extrudeuse (6) est réalisée comme une extrudeuse latérale, et en aval de l'extrudeuse latérale, un dispositif de mélange (7) et/ou un dispositif de refroidissement (8) est/sont prévu(s), auxquels la fonte polymère recyclée contenant un additif (22) et la fonte polymère contenant un produit moussant (18) peuvent être amenées ensemble.

8. Installation selon la revendication 7, dans laquelle en aval du dispositif de dégazage (13), un dispositif de dosage (20) est prévu pour mélanger la fonte polymère recyclée (12) avec un additif (14).

9. Installation selon les revendications 7 ou 8, dans laquelle le dispositif de mélange (3) et/ou le dispositif de mélange (7) comprend/comprennent un mélangeur statique, ou bien le dispositif de refroidissement (4) et/ou le dispositif de refroidissement (8) comprend/comprennent un mélangeur statique/échangeur thermique.
